# EUROPEAN PATENT APPLICATION

(11) **EP 4 134 150 A1**
(43) Date of publication of application: **15.02.2023**
(21) Application number: 22189278.9
(22) Date of filing: 08.08.2022
(51) Int. Cl.: B01D 53/00, B01D 53/72, B08B 15/00, B01D 46/00, B01D 46/62

(54) **SELF-CONTAINED AND MOVABLE AIR FILTER APPARATUS FOR MACHINE TOOLS WITH HIGH EFFICIENCY AND ENERGY RECOVERY**

(30) Priority: 09.08.2021 IT 202100021587
(71) Applicant: AR Filtrazioni S.r.l., 24126 Bergamo (IT)
(72) Inventor: RICEPUTI, Leonardo, 24126 BERGAMO (IT)
(74) Representative: Faggioni, Marco

(57) **Abstract**

An air filter apparatus for machine tools includes a first prefiltration area and a second fine filtration area of an air flow polluted by mist and vapours of water and processing oils. The fine filtration area includes several successive filtration stages (10-12) and a heat exchanger (S) arranged immediately upstream of the last filtration stage consisting of an EPA or HEPA filter (12), to cause the condensation and the coalescence of the mist and vapours of water and residual oils contained in said treated air flow.

## Description

### FIELD OF THE INVENTION

The present invention relates to an improved air filter apparatus for machine tools, and to an air treatment plant using the same. In particular, the invention relates to a self-contained and movable air filter apparatus which offers a reduced energy consumption, and an improved abatement efficiency of the mist and vapours of water and lubrication oils used in the mechanical processing of a machine tool, wherein such apparatus can be advantageously used in an air treatment plant with energy recovery of the heat dissipated in the environment by the machine tool.

### STATE OF THE PRIOR ART

The technique of confining in closed chambers machine tools and automatic machining centres in general, and then carrying out a continuous recirculation treatment of the air inside said closed chamber is well known to those skilled in the art, such technique having the dual purpose of purifying the output air from the closed chamber from the mist and vapours of water and lubrication oils used in the processing of the machine tool, and of stabilizing the temperature inside the closed chamber at a desired optimal value, e.g. 25°C.

As regards air purification, it is already known the use of a multi-stage filter apparatus which makes a progressive separation of any solid and liquid particles entrained by the air flow and, especially, of the droplets of water and oils suspended or in a vapour state in such flow, with a progressively higher efficiency in the various subsequent filter stages. As regards air conditioning, it is also known the use of a heat exchanger, which treats the output air flow from the filter apparatus to bring its temperature back to the desired value before reintroducing the treated air into the above said closed chamber, while dispersing the subtracted heat into the external environment surrounding the containment closed chambers of the machine tools.

US-20050136821, DE-102008009513, DE-102014111238, WO-2021/014723, are representative documents of such state of the art wherein the heat exchanger and the air filter apparatus are independent units. DE-19723846 - which is the closest known art to the present invention - discloses the use of a heat exchanger with low temperature coolant (2°C) placed inside a filter apparatus, immediately downstream of the first pre-treatment by centrifugal separator, to improve the oil removal efficiency.

Despite the improvement of efficiency in the separation of oils, the air filter apparatus disclosed in DE-19723846 has a low energy efficiency, and for this reason has not found a significant application in the market to date. In fact, cooling to such a low temperature as 2°C entails the use of high energy consumption cooling machines and also necessarily requires, in case of recycling, a subsequent heating step of the treated air by means of a second heat exchanger, before reintroducing the treated air into the environment, or it requires a mixing step with possibly heated external air, as provided by the same patent DE-19723846.

In a different technical field relating the treatment of gaseous effluents from professional kitchens, US-2009/264060 discloses the use of a condenser arranged downstream of a filtration system which includes several filters to directly remove via condensation the residual portion of condensable fats dispersed in the gas stream, prior to an activated carbon deodorization step.

In this context of the known art, the technical problem addressed by the present invention is to improve the efficiency of use of a heat exchanger inside an air filter apparatus for the purification of air flows polluted by mist and vapours of water and oils, in order to improve the abatement of water and oils entrained by the air flow, while achieving a higher energy efficiency of such apparatus, so as to allow an industrial-scale economical application of said air filter apparatus.

Within the scope of this technical problem, the main object of the present invention is to provide an air filter apparatus with heat exchanger which does not entails the use of a forced cooling of the air flow to be treated, thus avoiding the use of dedicated cooling machines and subsequent heating of the treated air flow.

In particular, another object of the invention is to provide an air filter apparatus with heat exchanger, wherein mains water or the same cooling lubricants used to keep the machine tool internal mechanisms at a controlled temperature can be used as the coolant.

Yet another object of the invention is to provide a special positioning of a heat exchanger inside an air filter apparatus, which improves the abatement of mist and vapours of water and lubrication oils while using an energy-efficient coolant, as indicated above.

Finally, a still further object of the invention is to provide an extremely compact and complete air filter apparatus with heat exchanger, which can be used as a self-contained transportable unit to be associated from time to time, through a simplified assembly, to a different closed chamber whose internal air needs to be treated.

### BRIEF DESCRIPTION OF THE INVENTION

This problem is solved, and these objects achieved by means of an air filter apparatus for machine tools having the features defined in the appended claim 1, and of an air treatment plant having the features defined in the appended claim 9. Other preferred features of said air filter apparatus are defined in the secondary claims.

### BRIEF DESCRIPTION OF THE DRAWINGS

Further features and advantages of the air filter apparatus according to the present invention will in any case become better evident from the following detailed description of a preferred embodiment of the same, given by mere way of a non-limiting example and illustrated in the accompanying drawings, wherein:
Fig. 1 is an overall perspective view of a self-contained and movable air filter apparatus according to the present invention, installed on a processing closed chamber of a machine tool;
Fig. 2 is an enlarged perspective view of the support container of the air filter apparatus of Fig. 1;
Fig. 3 is an exploded and perspective view of the various components of the air filter apparatus of Fig. 1; and

Fig. 4 is a longitudinal sectional view of the air filter apparatus of Fig. 1, in which the various components thereof are schematically indicated.

### DETAILED DESCRIPTION OF THE PREFERRED EMBODIMENT

According to the present invention, to solve the problem highlighted above by means of an easy to make and immediately applicable solution, the air filter apparatus is provided with a plurality of fine filtration stages and with a heat exchanger fitted immediately upstream of the last stage of fine filtration.

Thanks to this arrangement, in fact, the heat exchanger operates on an extremely low amount of residual water and residual oils in the air, so that only an extremely moderate amount of frigories is needed to obtain condensation thereof. Therefore, the heat exchanger can be small-sized and can make use, as a treatment fluid, of a liquid at a temperature just slightly lower temperature than the room temperature, which liquid is already normally available in an industrial site such as, for example, mains water or the same cooling lubricant used to keep the machine tool internal mechanisms at a constant temperature.

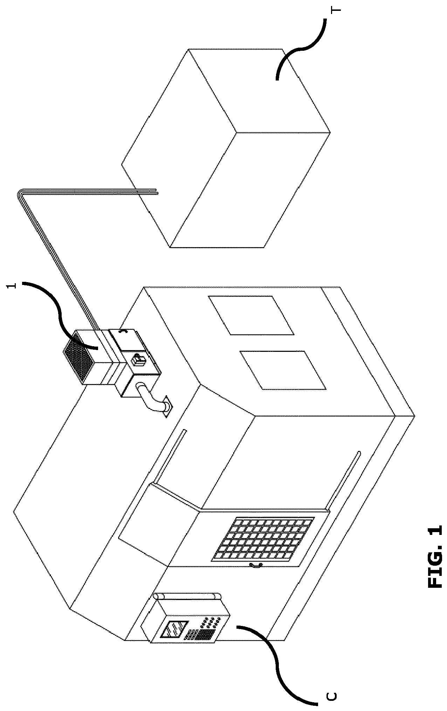

Fig. 1 illustrates a general diagram of a way of installing the air filter apparatus 1 according to the present invention, on the roof of a containment closed chamber C of a machine tool.

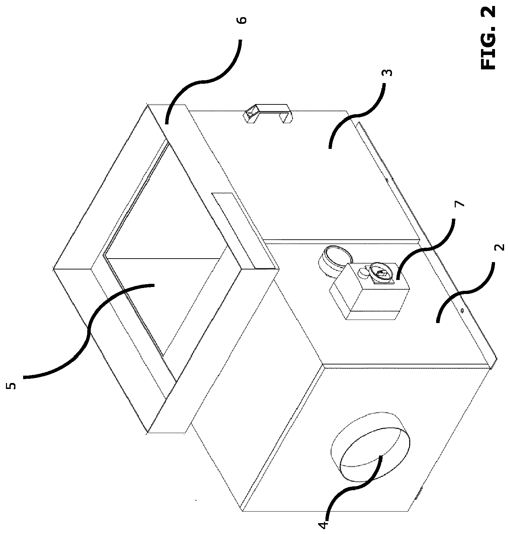

Fig. 2 illustrates a container 2 for mechanical support of the air filter apparatus 1 of the invention, wherein an access door 3, a suction mouth 4, an output opening 5 enclosed by a frame 6, and an on/off switch 7 are provided.

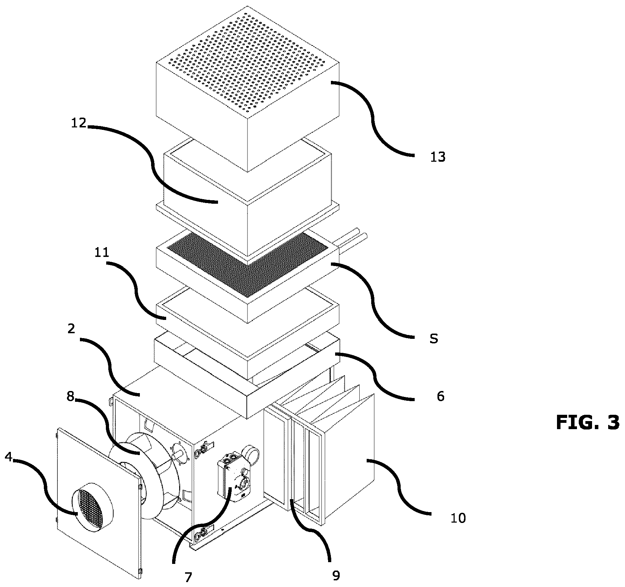

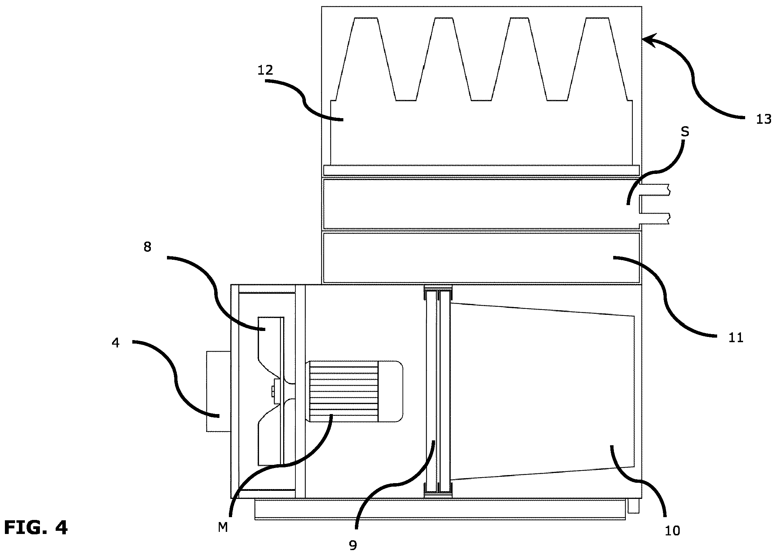

Figs. 3 and 4 illustrate the internal components of the air filter apparatus 1 which consist, as mentioned above, of various filtration stages, housed in a first pre-filtration area and in a second fine filtration area, and of a heat exchanger S. Starting from the suction mouth 4, the air filter apparatus 1 includes, in fact, five stages of separation of the oily phase dispersed in the air flow, and namely, following the direction of the air flow being treated:
- a centrifugal condenser 8, and
- a metal filter 9 which are the pre-filtration area stages,
- a pocket filter 10,
- a coalescing filter 11, and
- a final filter 12
which are the fine filtration area stages.

The centrifugal condenser 8 includes a rotating blade operated by an electric motor M. Said centrifugal condenser 8allows to condense about 80% of the oily mist by exploiting the centrifugal effect exerted on the droplets of water and oils which are launched against the walls of the container 2, where they collect through coalescence into larger droplets and thus fall by gravity on the bottom of the container 2.

The metal filter 9 is made of a galvanized steel mesh wherein the pre-filtration step is completed through a sieve effect that blocks any metal particles dragged by the air flow and retains water and oil droplets up to 3 µm, with a 95% filtration efficiency.

The fine filtration step is initiated in the pocket filter 10, which consists of a glass fibre fabric with a large filtering surface. Said pocket filter 10 has a filtration efficiency of 95% and allows to block water and oil droplets up to 0,4 µm.

Both in the metal filter 9 and in the pocket filter 10 a coalescing effect occurs among water and oil droplets trapped in the filters which, upon reaching a sufficient size, fall by gravity and collect at the bottom of the container 2.

The air flow being treated, which has so far followed a horizontal direction, is now diverted to a vertical direction by the wall of container 2, thus passing through the output opening 5 where a coalescing filter 11, of the black panel type, is housed and held in position by the frame 6. The coalescing filter 11, in addition to inducing the oil droplets coalescence, is also useful for homogenizing the air flow and reducing the noise. Finally, a high or very high efficiency ("EPA" or "HEPA" respectively) final filter 12, which can achieve up to 99,995% of filtration efficiency and retain oil droplets up to 0,15 µm, is placed on the coalescing filter 11. A perforated lid 13 covers and protects the EPA or HEPA filter.

According to a first feature of the present invention, a heat exchanger S is fitted immediately upstream of the EPA or HEPA filter 12, i.e., in a position where the oil droplets load in the air flow under treatment has been already strongly lowered by the first four separation stages. Said heat exchanger S causes the condensation and coalescence of the mist and vapours of water and oils still present in the air flow being treated, therefore significantly reducing the filtration load on the EPA or HEPA filter 12 and reducing the water and oils still in the vapour phase entering said final filter to a negligible fraction.

The exchanger S is cooled by means of a coolant circuit at temperatures slightly below room temperature, such as between 12°C and 24°C, preferably between 12°C and 20°C and even more preferably between 14°C and 16°C.

As a matter of fact, due to this particular placement of the heat exchanger S - i.e., in an area of the air filter apparatus 1 where a percentage greater than 80-90% of the water and oils initially contained in the treated air flow has already been removed - it is possible to achieve a complete condensation or coalescence of the residual fraction of water and oils in the vapour phase or in the finely dispersed liquid phase, even with a coolant temperature very close to room temperature , said coolant temperature being anyhow lower than the dew point of the water and oils contained in the air flow being treated. In this way, the energy consumption of the exchanger S is extremely low since it does not need a dedicated cooler, and mains water or the cooling lubricant which are already normally available for the machine tool management can be used as the coolant of the heat exchanger S. Moreover, the use of a coolant at a temperature close to room temperature allows the air flow treated by the air filter apparatus 1 to be re-introduced directly into the work environment where the closed chambers C containing the machine tools are installed, as can be seen in Fig. 1, thus considerably simplifying the installation of such apparatus and avoiding the costs for heating the output air flow, as instead envisaged by the known reference art.

In this regard, it should be noted that the features of structure and assembly of the air filter apparatus 1 of the present invention are such as to make said apparatus a completely self-contained and easily movable unit, so that it can be easily and quickly installed on a different processing closed chamber C, according to the specific air treatment needs from time to time, by simply connecting its suction mouth 4 to a respective air intake formed in said closed chamber C.

To this purpose, all the components of the air filter apparatus 1 are arranged compactly in a single container 2. In said container 2, in fact, the centrifugal condenser 8, the metal filter 9 and the pocket filter 10 are housed in horizontal sequence, while the coalescing filter 11, the heat exchanger S, the EPA or HEPA filter 12, and the perforated lid 13 are superimposed in vertical sequence on the upper surface of said container 2, in correspondence with the portion of container 2 housing the pocket filter 10.

Finally, according to another important feature of the invention, in the wintertime the heat absorbed in the heat exchanger S by the coolant, which coolant leaves said heat exchanger at a temperature of about 30°C or higher, can be advantageously recovered in a district heating system T of office or residential premises located near the industrial site where the machine tools are installed. It should further be noted that in the summertime the temperature of the air leaving the air filter apparatus 1 is in any case lower than that in the proximity of the machine tool, thus conferring to the air filter apparatus 1 a further accessory function of temperature reduction, helping to lower the room temperature in the industrial processing site. The overall energy efficiency and the water and oil abatement capacity of the air filter apparatus 1 of the present invention are therefore considerably increased with respect to the air filter apparatuses of the known type, wherein the heat exchanger is arranged in other positions than that illustrated above.

However, it is understood that the invention should not be considered as limited to the specific arrangements illustrated above, which are only exemplary embodiments thereof, but that various variants are possible, all within the reach of a person skilled in the art, without thereby departing from the scope of protection of the invention itself, which is only defined by the following claims.

## Claims

1. Air filter apparatus for machine tools, including a first pre-filtration area and a second fine filtration area of an air flow polluted by mist and vapours of water and processing oils, **characterized in that** said fine filtration area includes several successive filtration stages (10-12) and a heat exchanger (S) arranged immediately upstream of the last filtration stage consisting of an EPA or HEPA filter (12).

2. Air filter apparatus as in claim 1, wherein said heat exchanger (S) is cooled by a coolant having a temperature lower than room temperature and comprised between 12°C and 24°C, preferably between 12°C and 20°C and even more preferably between 14°C and 16°C.

3. Air filter apparatus as in claim 2, wherein said coolant is mains water or the same cooling lubricant used for cooling the internal mechanisms of said machine tool.

4. Air filter apparatus as in claim 2, wherein said first pre-filtration area includes a centrifugal condenser (8) and a subsequent mesh metal filter (9).

5. Air filter apparatus as in claim 4, further including a tray underneath said pre-filtration area, for collecting by gravity the oils separated by coalescence in said centrifugal condenser (8) and in said mesh metal filter (9).

6. Air filter apparatus as in claim 2, wherein said second fine filtration area includes a pocket filter (10), a coalescing filter (11), and said final EPA or HEPA filter (12).

7. Air filter apparatus as in any one of the preceding claims, including a container (2) wherein the centrifugal condenser (8), the metal filter (9) and the pocket filter (10) are housed in a horizontal sequence, while the coalescing filter (11), the heat exchanger (S), the EPA or HEPA filter (12), and a perforated lid (13) are superimposed in vertical sequence on the upper surface of said container (2) in correspondence with a portion of the container (2) housing the pocket filter (10).

8. Air filter apparatus as in claim 7, wherein said apparatus is a self-contained and movable unit, which can be connected to a closed chamber (C) whose internal air is to be treated, by connecting a suction mouth (4) of said container (2) to a corresponding air intake provided in said closed chamber (C).

9. Treatment plant for polluted air comprising mist and vapours of water and oils in a containment closed chamber (C) of a machine tool, including an air filter apparatus (1) as in any one of the preceding claims, arranged outside said closed chamber (C), and whose suction mouth (4) is connected to an air intake of said closed chamber (C), **characterized in that** the hot coolant leaving said heat exchanger (S) is sent to a district heating system (T) of office or residential premises.
